# EUROPEAN PATENT SPECIFICATION

(11) **EP 4 336 783 B1**
(45) Date of publication and mention of the grant of the patent: **08.04.2026**
(21) Application number: 23196010.5
(22) Date of filing: 07.09.2023
(51) Int. Cl.: H04L 12/14, H04M 15/04, H04M 15/00, H04W 4/24

(54) **LINK GENERATION FOR RAN PARSER**
VERBINDUNGSERZEUGUNG FÜR RAN-PARSER
GÉNÉRATION DE LIAISON POUR ANALYSEUR RAN

(30) Priority: 07.09.2022 US 202263404438 P; 27.01.2023 US 202363441663 P; 01.09.2023 US 202318459830
(43) Date of publication of application: 13.03.2024
(73) Proprietor: TC France S.A.S., 35136 Saint-Jacques-de-la-Lande (FR)
(72) Inventor: DURÁN ALCAIDE, Ángel, Marín (Pontevedra) (ES); RUBIO ESTEBAN, Juan, Meliana (Valencia), Spain (ES); NAVARRO PERIS, María A., Alzira (Valencia), Spain (ES); ROSELL SABORIT, Rubén, Nules (Castellón) (ES)
(74) Representative: Dehns

(56) References cited:
- US-A1- 2016 142 931
- US-A1- 2020 186 651

## Description

### FIELD OF THE DISCLOSURE

The present disclosure relates generally to networking and computing. More particularly, the present disclosure relates to systems and methods for link generation for a Radio Access Network (RAN) parser that links messages from different interfaces into cell fragments.

### BACKGROUND OF THE DISCLOSURE

In a telecommunications network, there are solutions for planning, troubleshooting and optimizing mobile networks using dynamic, geo-located devices, and subscriber data. A RAN Data Processing System (also referred to herein as a Parser, a RAN parser, and a parsing agent) is a scalable software adapter which collects and processes 2G, 3G, 4G and 5G 3rd Generation Partnership Project (3GPP) and vendor-specific RAN call events to generate call records and, optionally geolocated call records and real time location insights. The main output of RAN parser is a RAN user call data record (CDR) based on the messages provided by the network. This requires a correlation between different sources and messages found in the customer's information. And the aim is to provide the CDR as soon as the call in the network has finished. US 2016/0142931 A1 describes an automated measurement and analysis of end-to-end performance of voice over long term evolution service. US 2020/0186651 A1 describes an end-to-end session-related call detail record.

### BRIEF SUMMARY OF THE DISCLOSURE

According to a first aspect of the invention, there is provided a method having the features of claim 1.

According to a second aspect of the invention, there is provided a processing system having the features of claim 7.

According to a third aspect of the invention, there is provided a signal having the features of claim 8.

According to a fourth aspect of the invention, there is provided a computer-readable medium having the features of claim 9.

### BRIEF DESCRIPTION OF THE DRAWINGS

The present disclosure is illustrated and described herein with reference to the various drawings, in which like reference numbers are used to denote like system components/method steps, as appropriate, and in which:
FIG. 1 is a block diagram of architecture of a Link Generation Service.
FIG. 2 is a message flow diagram of an RRC Connection Request between a UE and an eNB.
FIG. 3 is a message flow diagram of a X2AP Handover Request between a source eNB and a target eNB.
FIG. 4 is a message flow diagram of a S1AP Handover Request message flow between the target eNB and an MME.
FIG. 5 is a message flow diagram of an RRC Connection Reestablishment Request message flow between the UE and the eNB.
FIG. 6 is a message flow diagram of an X2AP Handover Report message flow between the source eNB and the target eNB.
FIG. 7 is a message flow diagram of an X2AP RLF Indication message flow between the source eNB and the target eNB.
FIG. 8 is a message flow diagram of an RRC Connection Request-NB between a UE and an eNB.
FIGS. 9 - 14 are flowcharts of various processes associated with the Link Generation Service. FIG. 9 is a Link Generation process. FIG. 10 illustrates how to link messages without fragmentID1 and fragmentlD2 to a fragment. FIG. 11 illustrates how to link messages with the fragmentID1 and the fragmentID2 to a fragment. FIG. 12 illustrates how to process S1AP Reset messages. FIG. 13 illustrates how to store unlinked EUTRA-RRC RRC Connection Request messages. FIG. 14 illustrates how to retrieve unlinked messages.
FIG. 15 is a flowchart of a process for link generation for a Radio Access Network (RAN) parser that links messages from different interfaces into cell fragments.
FIG. 16 is a block diagram of a processing system, which may be used to implement the process.

### DETAILED DESCRIPTION OF THE DISCLOSURE

Again, the present disclosure relates to systems and methods for link generation for a Radio Access Network (RAN) parser that links messages from different interfaces into cell fragments. The purpose of the current Parsers (non-cloud native) is to be able to regenerate a RAN user call based on the messages provided by the network. There is a correlation between different sources and messages, and this information is targeted as soon as the call in the network has finished. Apart from the "call details" output (CDR), the parser is able to provide other processed outputs, such as the geolocation (GDR) of the user along the call in Near Real Time (NRT) or specific Key Performance Indicators (KPIs) that allow optimization algorithms and recommendations to the network operator about which should be changed in the RAN network configuration to improve its quality. Parsers receive information provided by the customer network elements by files or by TCP streams (natively only in the Cloud Parser architecture). The supported formats depend on the vendor and technology; therefore, the Parsers should be able to understand, process and provide the corresponding outputs independently of the vendor/technology specificities.

The present disclosure includes a Cloud Native Parser that reproduces the behavior of the current Parsers via a new architecture that requires changes in terms of how the information is processed how it is distributed along the different elements, how it is generated and how it is sent out of the system. The Cloud Native Parser aims to replace the legacy architecture making it more flexible and able to be deployed in several pieces along different locations (edge, central, etc. in a customer network in front of the monolithic version where only the central site deployment was allowed.

### RAN parser

RAN parsers require Call Traces (CTs) as inputs. CTs are generated by Network Elements (NEs) from the client's mobile network and have a vendor proprietary format depending on
- the vendor itself: e.g., Huawei, Nokia, Ericsson, Samsung, ZTE...
- the technology of the mobile network: 2G, 3G, 4G, 5G, etc.
- the trace format: e.g., there are Huawei 4G traces in format "TRC" and Huawei 4G traces in format STDSIG, and not only the format changes but also the content (there is information present in one but not in the other and vice versa)
- the trace release: there can be internal changes between vendor release X.1 and vendor release X.2 of a certain trace format (changes in existent information, addition of new information, deprecation of existent information).

### Link Generation service

Input messages to a Parser need to be linked to a certain call, even if standard information necessary to do that is not present in the message itself. The present disclosure includes a Link Generation Service for the Parser that is configured to link messages. The Link Generation service has the following characteristics:
- it can be deployed at the edge instead of in a centralized monolithic location
- The linking of messages to a certain call is vendor/technology agnostic
- We are able to link messages to a call, even when the standard information to do that is not present
- Load Balancing performed by Network element based on information received in the messages

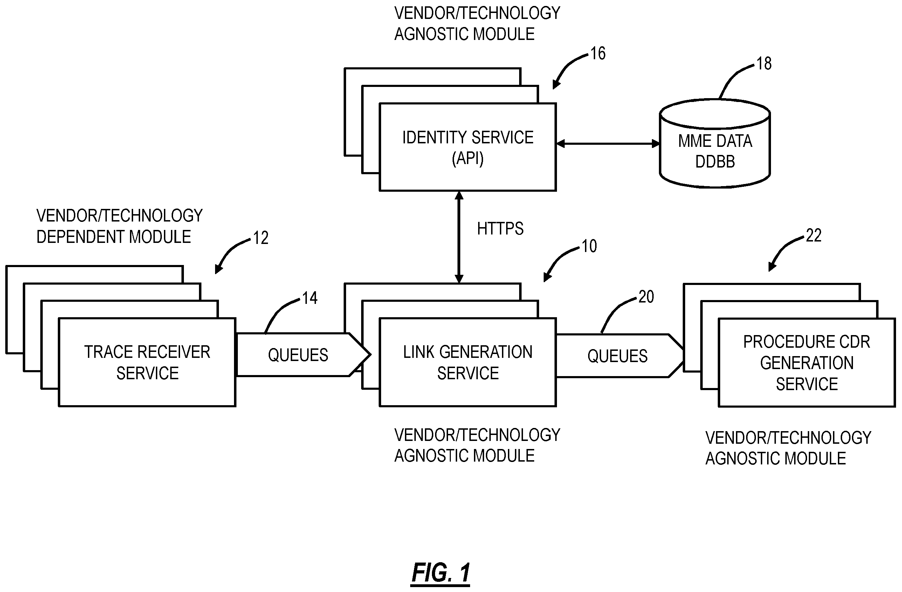

FIG. 1 is a block diagram of architecture of a Link Generation Service 10. Input information for the Link Generation Service 10 is the output information generated by a Trace Receiver Service 12 in vendor/technology agnostic format, allowing to keep independent of the vendor and technology all the elements after it in the microservices pipeline. Therefore, the Link Generation Service 10 can be considered as a vendor/technology agnostic module itself. The Trace Receiver Service 12 is configured to receive technology-specific and/or vendor-specific Call Trace messages and output data in a shared common output format that is the same regardless of vendor and/or technology.

A linkage between messages (link together all messages pertaining to the same user call) is crucial in the behavior of the parsers to reproduce the calls happening in the network and then to extract and summarize the information at call level that is relevant to the customers. The input format is described as follows. Those skilled in the art will appreciate this is merely illustrative and practical embodiments may include other vendors, technologies, new vendors, technology, etc.

**Table 1. Input of Link Generation Service**

| **Field** | **Type** | **Description** |
|---|---|---|
| **timestamp_utc_ms** | int64 | Timestamp of the message in milliseconds |
| **time_zone_correction** | int32 | Time zone correction |
| **timestamp_dst_cor** | int32 | Day Light Save Time Correction |
| **technology** | int32 | Technology |
| **vendor** | int32 | Vendor |
| **version** | int32 | Version |
| **mcc** | string | Mobile Country Code of the subscriber network (3 digits) |
| **mnc** | string | Mobile Network Code of the subscriber network (2 o 3 digits) |
| **fragment_id_1** | int64 | First Identifier of the Unique Session Id for User Equipment (UE) |
| **fragment_id_2** | int64 | Second Identifier of the Unique Session Id for the UE |
| **enb_id** | int64 | eNode B Id or gNode B Id depending on technology |
| **cell_id** | int32 | Cell Id |
| **core_ue_id** | int64 | mme_ue_s1ap_id or amf_ue_ngap_id depending on the technology. Uniquely identifies the UE association over the S1 interface within the MME or NG interface within the AMF |
| **ran_ue_id** | int64 | enb_ue_s1ap_id or ran_ue_ngap_id depending on the technology. Uniquely identifies the UE association over the S1 interface within an eNB or NG interface within an gNB |
| **gummei** | int64 | gummei or guami depending on the technology. Unique identifier of an MME or an AMF |
| **c_rnti** | int32 | C-RNTI Identifier |
| **message_type** | int32 | enumerated to identify the same message from different vendors |
| **message_direction** | int32 | Message direction: sent, received |
| **message_content** | bytes | asn.1 content for 3GPP messages, raw data for messages |
| **gnodeb_id_length** | int32 | Number of bits used to encode gNodeB Id |

The Link Generation Service 10 receives vendor/technology agnostic from the Trace Receiver Service 12 via queues 14, communicates via Hypertext Transfer Protocol Secure (HTTPS) to an Identity Service 16 which communicates with a database 18, and provides output, via queues 20, to a CDR Procedure Generation Service 22. Note, in an embodiment, the system can be implemented in Apache Kafka. In the Apache Kafka Queueing system, messages are saved in a queue fashion. This allows messages in the queue to be ingested by one or more consumers, but one consumer can only consume each message at a time. The Queue topic in the Apache Kafka Queue will contain the messages to be processed. Apache Kafka is an example of a publishing system.

### Processing

The main functionalities of the Link Generation Service 10 performed with that input information are described as follows.

### Classification of messages in calls

Messages are linked to a UE (User Equipment) session using fragment Id 1 and fragment Id 2 identifiers. These identifiers are unique at a given time but can be repeated over time. The Parser aims to create fast outputs, breaks down a UE session or 'call' into 'cell fragments', separating in different outputs the part of the connection under each serving cell. In this document, the word "call" is used interchangeably with "cell fragment of a call". When we create a call, we assign a unique identifier (cCDRID 'cell Call Data Record Identifier') as follows:
- **Source Id** (string): edge_id + '.' + last 5 characters of POD_NAME
- **Cell Fragment Id** (8 bytes): auto incremental value (starting from 0)

To create the calls correctly and not join messages randomly, there are several considerations to take into account:
- calls are categorized based on start type. A call can only have one start type
- only a limited set of messages can start a call: depending on the message that starts the call, the algorithm selects the start type
- calls during processing could be in 3 different states: started, established, or ended. This call state determines how the messages are processed
- calls can be ended by 2 reasons:
   ∘ network identifier exhaustion. Identifier is repeated within the network
   ∘ timeout: depending on call state, the algorithm will wait a variable amount of time to decide that new messages belonging to a call will not be received and therefore sets its state to 'ended'
- when the algorithm makes the decision of ending a call, a message is created that is used by the following modules to complete the call processing

### International Mobile Subscriber Identity (IMSI)- International Mobile Equipment Identity (IMEI) enrichment by means of network identifiers

In 2G and 3G the Call Trace information contained both the events happening during the call and the user identities (IMSI for user and IMEI for device) of the user performing the call. Since 4G onwards (4G and 5G for now), user identities are encrypted and are retrieved from a separate source of information.

When a Call Trace message containing Mobility Management Entity (MME) UE S1AP (S1 Application Protocol) Id - evolved Node B (eNB) UE S1AP Id identifiers arrives (only certain messages contain them), the Link Generation Service 10 asks the Identity Service 16 for the user identifiers (IMSI/Subscription Concealed Identifier (SUCI)-IMEI). They are stored in a database 18 that can only be accessed through the Identity Service 16, and contains entries relating MME UE S1AP Id - eNB UE S1AP Id to user identifiers and timestamps (the S1AP Id's are re-used continuously by the network therefore they relate to a user only for a certain period of time). The same logic is applicable for 5G messages. In this case MME UE S1AP Id is called AMF UE S1AP Id and eNB UE S1AP is called RAN UE NGAP Id in 5G. In this document, "MME UE S1AP Id" is used interchangeably with "AMF UE S1AP Id" or "Core UE Id" and "ENB UE S1AP Id" is used interchangeably with "RAN UE Id" or "RAN UE NGAP Id".

Therefore, the Link Generation request uses as keys:
- **MME UE S1AP Id** - **eNB UE S1AP Id** identifiers
- a truncated timestamp: truncation of the timestamp can be setup to different values (5 minutes, 1 minute...). Timestamps in the identity database 18 are also stored in truncated time buckets

And obtains as result the user identifiers specifically related to the message being processed:
- IMSI/SUCI
- IMEI

To improve performance:
- requests can be done for a batch of messages, for example those inside the configurable period of sampling time (e.g., 2500ms)
- request can also consider the synchronization with the identity database 18. The Identity Service 16 provides the Link Generation Service 10 with synchronization information that allows the Link Generation Service 10 to know if data is already available in the identity database 18. If it is not, the Link Generation Service 10 keeps in memory the messages for a while. After a certain period, if data is still not present then the information about user identifiers cannot be retrieved.
- only those keys that can be potentially resolved are sent by the Link Generation Service 10 to the Identity Service 16
- if any information is found for a certain message on a certain call, the Link Generation Service 10 avoids requesting it again for every message belonging to the same call, that is, from that moment on, user identifiers enrichment is applied to all subsequent messages of the same call based on the local cache.

### Link UE messages without fragment id 1 and/or fragment id 2 to a cell fragment

An approach to linking uses Fragment Id 1 and Fragment Id 2 to attach the messages to a call. All the searches are made inside the same Network Element, this means they have the same:
- Technology
- Vendor
- MCC
- MNC
- eNB Id

In an embodiment, the **fragment_id_1** and **fragment_id_2** are calculated fields based on vendor/technology dependent information contained in the Call Trace 14. They allow services in the pipeline to continue processing information without being vendor aware. The following is an example of calculation for some of the vendors in 4G and 5G. Again, those skilled in the art will appreciate this is merely illustrative and practical embodiments may include other vendors, technologies, new vendors, technology, etc.

**Table. Example of calculation of Fragment Id1 & Fragment Id2 for some vendors in LTE (4G) and NR (5G)**

| | **Fragment Id 1** | **Fragment Id 2** |
|---|---|---|
| **Ericsson LTE** | Global Cell Id - Radio Access Controller (RAC) UE Ref | Trace Recording Session Reference |
| **Huawei LTE** | eNodeB Id - Cell Id - CRNTI | Call Id |
| **Nokia LTE** | eNodeB Id - Cell Id | Evolved-UMTS Terrestrial Radio Access Network (EUTRAN) Trace ID |
| **Samsung LTE** | eNodeB Id - Cell Id | Public Land Mobile Network (PLMN) Id - Trace Id - Trace Recording Session Reference |
| **Huawei New Radio (NR)** | gNodeB Id - Cell Id | Call Id |
| **Samsung NR** | gNodeB Id - Cell Id | PLMN Id - Trace Id - Trace Recording Session Reference |

But there are some messages that do not have **fragment id 1** and/or **fragment id 2,** so they cannot be attached to a call using this approach. For each of these messages, a special type of linking process is made using standard fields from other messages already linked to the call (in addition to Network Element identifier).

These other messages can include a Radio Resource Control (RRC) Connection Request, an RRC Connection Request-NB, an X2AP Handover Request (eNB target), an S1AP Handover Request, an RRC Connection Reestablishment Request, an X2AP Handover Request, an X2AP Radio Link Failure (RLF) Indication, an S1AP Reset, S1AP Reset Acknowledge, and the like. The following describes using standard fields from these other messages, according to some embodiments.

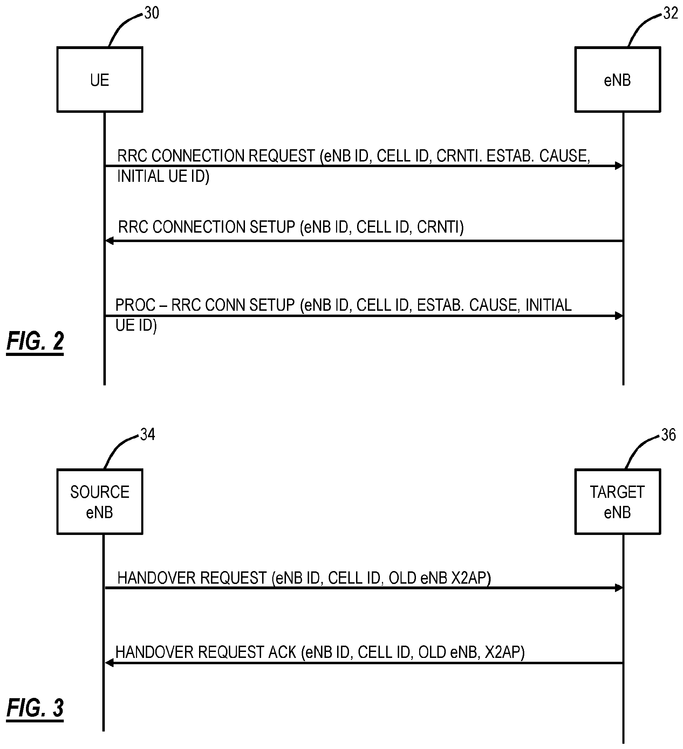

FIG. 2 is a message flow diagram of an RRC Connection Request between a UE 30 and an eNB 32. The UE 30 sends an RRC Connection Request to the eNB 32, the eNB 32 responds with an RRC Connection Setup, and the UE 30 sends a Proc RRC Conn Setup message to the eNB 32. Of note, message fields include various information, as shown in FIG. 2, including message fields "Estab. Cause" and "Initial UE Identity" which can be decoded from these messages. The maximum time between *RRC Connection Request* and *Proc RRC Conn Setup* messages should be 30 seconds. To link this message, we use a multimap with key:
<<crnti, cellid>, <initialUeldentity, rrcEstabCause>>

FIG. 3 is a message flow diagram of a X2AP Handover Request between a source eNB 34 and a target eNB 36. The source eNB 34 sends a Handover Request to the target eNB 36 which responds with a Handover Request Acknowledgement. Of note, message fields include various information, as shown in FIG. 3, including message field of "Old eNB X2AP" which can be decoded from these messages. Instead of Handover Request Acknowledge, Handover Preparation Failure or Handover Cancel messages can be used. To link this message, we use a map with key:
<cellid, Old eNB X2AP>

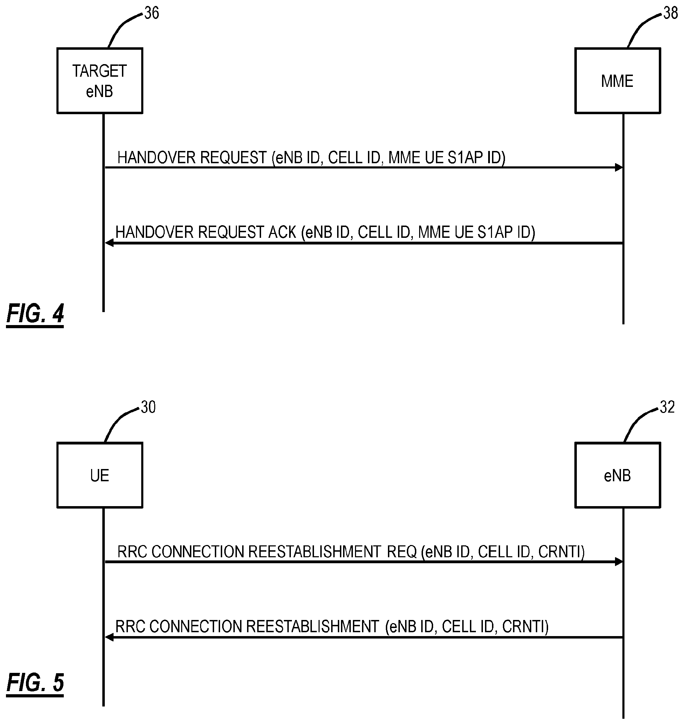

FIG. 4 is a message flow diagram of a S1AP Handover Request message flow between the target eNB 36 and an MME 38. The target eNB 36 sends a Handover Request to the MME 38, and the MME 38 responds with a Handover Request Acknowledgment. Instead of a Handover Request Acknowledge, a Handover Failure message can be used. Of note, message fields include various information, as shown in FIG. 4. We use the header fields, and to link this message, we use a map with key:
<cellid, mme_ue_s1ap_id>

FIG. 5 is a message flow diagram of an RRC Connection Reestablishment Request message flow between the UE 30 and the eNB 32. The UE 30 sends an RRC Connection Reestablishment Request message to the eNB 32, and the eNB 32 responds with an RRC Connection Reestablishment message to the UE 30. Of note, message fields include various information, as shown in FIG. 5. "CRNTI" is an optional field, only used when it is possible. To link this message we can use 2 different maps:
<cellid, crnti>
   and
<cellid, fragmentld2>

When the message RRC Connection Reestablishment Request arrives, depending on fragmentld2 field being available or not, the message will be stored in the fragmentid2 map or in the crnti. When RRC Connection Reestablishment or RRC Connection Reject arrives, they will find the RRC Connection Reestablishment Request by crnti and in case of failure, they will try again by fragmentld2. The maximum time between RRC Connection Reestablishment Request and RRC Connection Reestablishment messages should be 350 milliseconds.

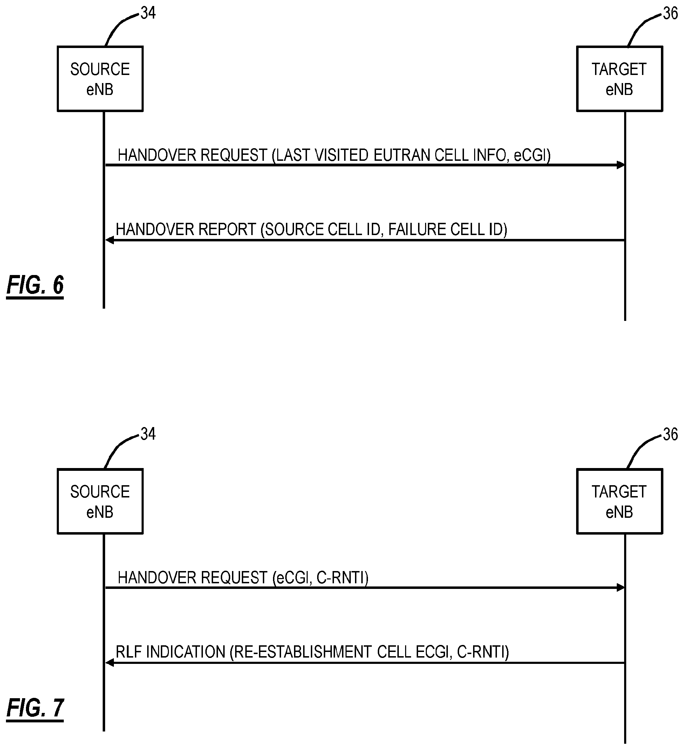

FIG. 6 is a message flow diagram of an X2AP Handover Report message flow between the source eNB 34 and the target eNB 36. The source eNB 34 sends a Handover Request message to the target eNB 36, and the target eNB 36 responds with a Handover Report message. Of note, message fields include various information, as shown in FIG. 6. Fields "Last Visited EUTRAN cell information", "eCGI", "source cell Id" and "failure cell Id" have to be decoded in this module. To link this message, we use a map with key:
<sourceCellid, failureCellld>

FIG. 7 is a message flow diagram of an X2AP RLF Indication message flow between the source eNB 34 and the target eNB 36. The source eNB 34 sends a Handover Request message to the target eNB 36, and the target eNB 36 responds with RLF Indication message. Of note, message fields include various information, as shown in FIG. 7. Fields "Re-establishment Cell Id", "eCGI", "C-RNTI" and "failure cell Id" have to be decoded in this module. To link this message, we use a map with key:
<reEstablishmentCellid, crnti>

For S1AP Reset and S1AP Reset Acknowledge messages (the same logic is applicable to the NGAP Reset and NGAP Reset Acknowledge messages), for these pair of messages, we have 3 scenarios:
CASE 1: Reset message with empty UE-associated logical S1-connection Item IEs. Reset message is linked to all fragments of the same eNB (Vendor, Technology, MCC-MNC, eNodeB Id).
CASE 2: UE-associated logical S1-connection Item IEs have only MME UE S1AP Id or eNB UE S1AP Id. Reset message is linked to all fragments with the same eNB (Vendor, Technology, MCC-MNC, eNodeB Id).
CASE 3: UE-associated logical S1-connection Item IEs have MME UE S1AP Id and eNB UE S1AP Id. Reset message is linked to all fragments with the same identifiers MME UE S1AP Id, eNB UE S1AP Id in the same eNB (Vendor, Technology, MCC-MNC, eNodeB Id).

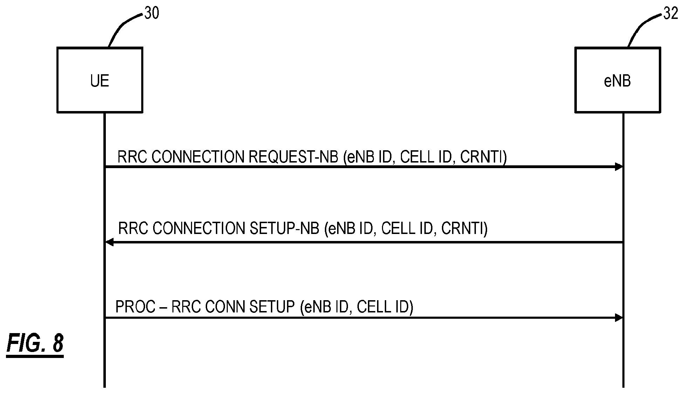

FIG. 8 is a message flow diagram of an RRC Connection Request-NB between a UE 30 and an eNB 32. The UE 30 sends an RRC Connection Request-NB to the eNB 32, the eNB 32 responds with an RRC Connection Setup-NB, and the UE 30 sends a Proc RRC Conn Setup message to the eNB 32. The maximum time between *RRC Connection Request-NB* and *Proc RRC Conn Setup* messages should be 30 seconds. To link this message, we use a multimap with key:
<cmti, cellid>

### Enrichment of some fields

A subset of fields of interest that could not be fulfilled during the processing performed by the Trace Receiver Service 12 are enriched within Link Generation Service 10.
- **cell_Id:** once a message is linked to a call, cell id can be added if it is not present just relying on call context
- **message_direction:** there are network messages that can go in both directions (sent/received) depending on the traced network element that generates it. Once the message is linked to the call, the algorithm is able to determine the real direction

### Flowcharts

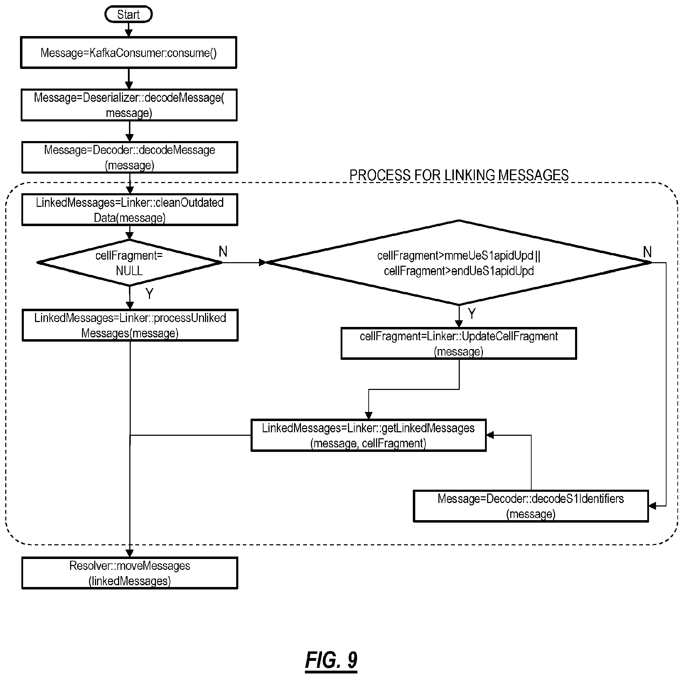

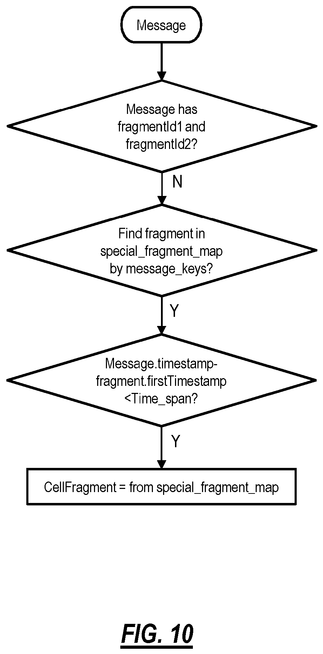

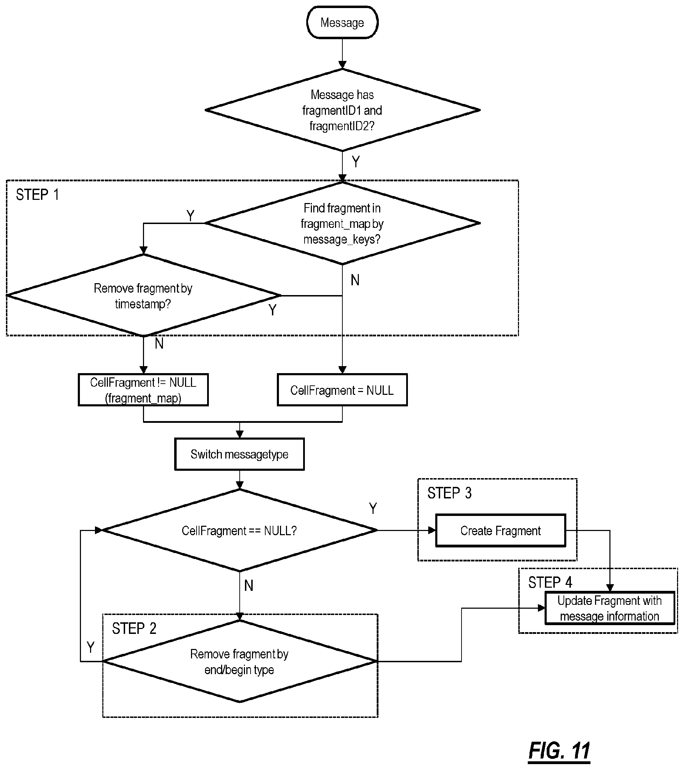

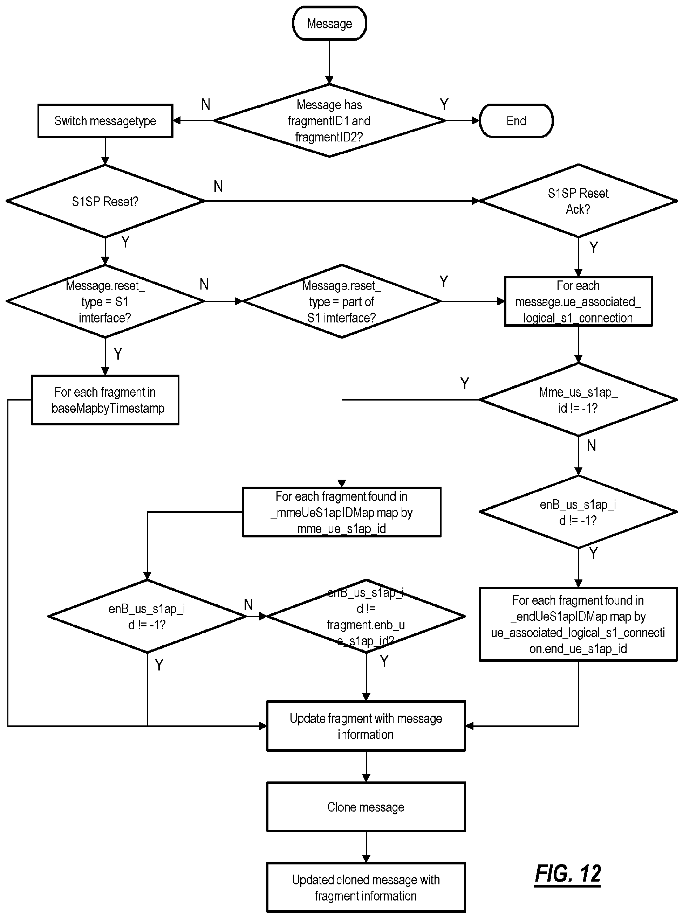

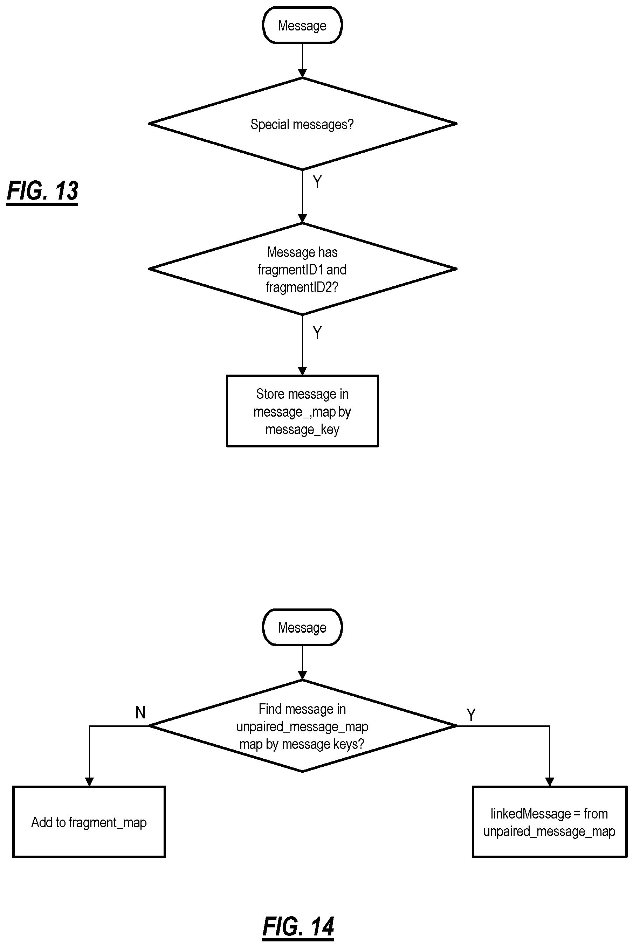

FIGS. 9 - 14 are flowcharts of various processes associated with the Link Generation Service. FIG. 9 is a Link Generation Service process. FIG. 10 illustrates how to link messages without fragmentlD1 and fragmentlD2 to a fragment. FIG. 11 illustrates how to link messages with the fragmentID1 and the fragmentlD2 to a fragment. FIG. 12 illustrates how to process S1AP Reset messages. FIG. 13 illustrates how to store unlinked messages as EUTRA-RRC RRC Connection Request messages. FIG. 14 illustrates how to retrieve unlinked messages.

In FIG. 9, the Link Generation Service process is generalized to illustrate how the Link Generation Service 10 links the message to a cell fragment identifier.

The basic steps are:
1. Get cell fragment: link the message to the cell fragment.
2. Process unlinked messages: process special messages that were not able to obtain a cell fragment, i.e., messages without the FragmentlD1 or FragmentlD2
3. Update cell fragment: update cell fragment information with message information and update some maps used to link special messages
4. Get linked messages: try to retrieve special messages stored in step 2

### Get cell fragment

There are two different scenarios depending on if the message has fragment1 and fragmentld2 parameters:
a. Messages without fragmentld1 and fragmentld2
b. Messages with fragmentld1 and fragmentld2

**Scenario 1: Messages without fragmentld1 or fragmentld2** - Each type of special message tries to retrieve the fragment by searching in a specific map and with specific keys depending on the message type. There are also time considerations to decide if the fragment with the same keys is the right one. Again, FIG. 10 illustrates how to link messages without fragmentID1 and fragmentID2 to a fragment. Table 2 shows the map, the keys and the temporary condition for each type of message:

**Table 2. Get cell fragments without fragment identifiers messages details**

| **Message** | **Fragment map** | **Message keys** | **Time span** |
|---|---|---|---|
| **EUTRA-RRC RRC Connection Request** | _rrcConnRequestMap | CRNTI, Cell Id, Initial UE Identity, Establishment Cause | 30 seconds |
| **EUTRA-RRC RRC Connection Reestablishment Request¹** | _reEstabRequestByFrag mentld2Map | Cell Id, fragment Id 2 | 350 milliseconds |
| **EUTRA-RRC RRC Connection Reestablishment Request¹** | _reEstabRequestByCrnti Map | Cell Id, crnti | 350 milliseconds |
| **X2AP Handover Request** | _x2HoReqMap | Cell Id, Old UE X2AP Id | 30 seconds |
| **S1AP Handover Request** | _s1HoReqMap | Cell Id, MME UE S1AP Id | 30 seconds |
| **X2AP Handover Report** | _x2HoReportMap | Source cell ECGI, Failure cell ECGI | 30 seconds |
| **X2AP RLF Indication** | _x2RlfIndicationMap | Reestablishment cell ECGI, CRNTI | 30 seconds |
| **EUTRA-RRC RRC Connection Request-NB** | _rrcConnRequestMapNb | CRNTI, Cell Id | 30 seconds |

| | | | |
|---|---|---|---|
| Note 1: EUTRA-RRC Connection Reestablishment Request will search in two different maps depending on having fragmentld2 parameter or not. Also, in the key of every map we have to add: message.technology, message.vendor, message.mcc, message.mnc, | | | |

**Scenario 2: Messages with fragmentld1 and fragmentld2** - These messages try to find an already created fragment, in case they do not find it, they will create one. Again, FIG. 11 illustrates how to link messages with the fragmentlD1 and the fragmentID2 to a fragment. The several steps are marked in the FIG. 11 to show the decision algorithm:

Step 1: In this case, cell fragment is always searched in a map where the keys are fragmentld1 and fragmentld2. In case cell fragment is found, there are time considerations to remove the found fragment or not. The fragment will be removed in two example cases:
∘ if the difference between message timestamp and the last linked message timestamp is higher than 7 minutes
∘ If the fragment has a valid end type value and the difference between message timestamp and the last linked message timestamp is higher than 30 seconds

Removing a fragment implies:
1. Creating an End message and link it to the fragment
2. Removing the fragment from all maps where it is stored

Step 2: depending on the message type, check if the fragment obtained in step 1 is correct or it should be removed. Conditions to remove a fragment:
- Fragment established and with a valid end type value
- Fragment established with a begin type different from the one obtained by the message type

Table 3 shows the fragment begin type depending on message type:

**Table 3. Begin type vs message type**

| **Begin Type** | **Message** |
|---|---|
| RRC Establishment | EUTRA-RRC RRC Connection Request |
| | EUTRA-RRC RRC Connection Setup |
| | EUTRA-RRC RRC Connection Reject |
| | EUTRA-RRC RRC Connection Setup Complete |
| | EUTRA-RRC RRC Connection Request - NB |
| | EUTRA-RRC RRC Connection Setup - NB |
| | EUTRA-RRC RRC Connection Reject - NB |
| | EUTRA-RRC RRC Connection Setup Complete - NB |
| | EUTRA-RRC RRC Resume Request - NB |
| | EUTRA-RRC RRC Resume - NB |
| | EUTRA-RRC RRC Resume Complete - NB |
| | NR-RRC Setup Request |
| | NR-RRC Setup |
| | NR-RRC Reject |
| | NR-RRC Setup Complete |
| | NR-RRC Resume Request |
| | NR-RRC Resume |
| | NR-RRC Resume Complete |
| | ProcRrcConnSetup |
| | S1AP Initial UE Message |
| | NGAP Initial UE Message |
| RRC Reestablishment | EUTRA-RRC RRC Connection Reestablishment Request |
| | EUTRA-RRC RRC Connection Reestablishment |
| | EUTRA-RRC RRC Connection Reestablishment Failure |
| | EUTRA-RRC RRC Connection Reestablishment Complete |
| | EUTRA-RRC RRC Connection Reestablishment Request - NB |
| | EUTRA-RRC RRC Connection Reestablishment - NB |
| | EUTRA-RRC RRC Connection Reestablishment Failure - NB |
| | EUTRA-RRC RRC Connection Reestablishment Complete - NB |
| | NR-RRC Reestablishment Request |
| | NR-RRC Reestablishment |
| | NR-RRC Reestablishment Complete ProcRrcConnection Reestablishment |
| X2AP Handover (only messages from target eNB) | X2AP Handover Request |
| | X2AP Handover Request Acknowledge |
| | X2AP Handover Cancel |
| | X2AP Handover Preparation Failure |
| | XNAP Handover Request |
| | XNAP Handover Request Acknowledge |
| | XNAP Handover Cancel |
| | XNAP Handover Preparation Failure |
| S1AP Handover | S1AP Handover Request |
| | S1AP Handover Request Acknowledge |
| | S1AP Handover Failure |
| | NGAP Handover Request |
| | NGAP Handover Request Acknowledge |
| | NGAP Handover Failure |
| RRC Handover | EUTRA-RRC Connection Reconfiguration Complete |
| ENDC * | X2AP SgNB Addition Request |
| | X2AP SgNB Addition Request Acknowledge |
| | X2AP SgNB Modification Required |
| | X2AP SgNB Modification Confirm |
| | X2AP SgNB Release Request |
| | X2AP SgNB Release Request Acknowledge |
| | X2AP SgNB Release Required |
| | X2AP SgNB Release Confirm |
| | X2AP SgNB Modification Request |
| | X2AP SgNB Modification Request Acknowledge |
| | X2AP SgNB Change Required |
| | X2AP SgNB Change Confirm |
| | X2AP SgNB Reconfiguration Complete |
| Other | Other messages |

Table *Note: There are some messages that do not perform this step:
- RRC Reestablishment messages only perform this step if fragment begin type is "Other".
- EUTRA-RRC RRC Connection Reconfiguration Complete and EUTRA-RRC Connection Reconfiguration
- X2AP message when they come from the source eNB

Table Step 3: Messages listed in Table create a fragment if they are not already linked to one in the previous steps. Creating a fragment means a) add the fragment in _indexMapByTraceldentifierKey map (this map is the one that is used in this scenario) and b) update some parameters with the information of the message that triggers the creation: fragmentld1, fragmentld2, firstTimestamp, lastTimestamp, beginType, enbld, technology, cellld. If the beginType is "Other", the fragment is also set as "Established".

Special cases: Although EUTRA-RRC RRC Connection Reconfiguration Complete and EUTRA-RRC RRC Connection Reconfiguration messages have valid fragmentld1 and fragmentld2, before creating a new fragment they will try to find the fragment as in Scenario 1 (EUTRA-RRC RRC Connection Reconfiguration will only do it if it contains Mobility Control Info parameter). In this case the parameters are:
Fragment map: _eutraRrcRrcConnReconfMap
Message keys: cellld and fragmentld2
Time span: 30 seconds

If the fragment found has beginType different from ENDC, this search is considered invalid, and a cell fragment is created.

Step 4: update fragment with message information. All messages linked to the fragment will update: lastTimestamp and lastMessage parameters. Additionally, depending on the message different information will be updated:

**Table 4. Begin type vs message type**

| **Message** | **Updated parameter** |
|---|---|
| EUTRA-RRC RRC Connection Request | crnti |
| EUTRA-RRC RRC Connection Setup | crnti |
| EUTRA-RRC RRC Connection Reject | crnti |
| EUTRA-RRC RRC Connection Setup | crnti |
| Complete | Established |
| EUTRA-RRC RRC Connection Request-NB | crnti |
| EUTRA-RRC RRC Connection Setup-NB | crnti |
| EUTRA-RRC RRC Connection Reject-NB | crnti |
| EUTRA-RRC RRC Connection Setup | crnti |
| Complete-NB | Established |
| NR-RRC Setup Request | crnti |
| NR-RRC Setup | crnti |
| NR-RRC Reject | crnti |
| NR-RRC Setup Complete | crnti |
| NR-RRC Resume Request | crnti |
| NR-RRC Resume | crnti |
| NR-RRC Resume Complete | crnti |
| ProcRrcConnectionReestablishment | endType, if last message in the fragment is EUTRA-RRC RRC Reestablishment Reject |
| EUTRA-RRC Connection Reconfiguration Complete | Established if begin type = RrcReconfiguration |
| S1AP Handover Notify | Established if begin type = S1apHo |
| NGAP Handover Notify | Established if begin type = S1apHo |
| EUTRA-RRC RRC Connection Release | Endtype = RRC |
| NR-RRC RRC Release | Endtype = RRC |
| S1AP UE Context Release Complete | Endtype = S1apHo |
| NGAP UE Context Release Complete | Endtype = S1apHo |
| XNAP UE Context Release(source gNB) | Endtype = X2apHo |
| XNAP UE Context Release(target gNB) | Established if begin type = X2apHo |
| X2AP SgNB Addition Request | Established if begin type = ENDC and technology = LTE and the fragment was created by this message |
| X2AP SgNB Addition Request Acknowledge | Established if begin type = ENDC and technology = LTE and the fragment was created by this message |
| X2AP SgNB Modification Required | Established if begin type = ENDC and technology = LTE and the fragment was created by this message |
| X2AP SgNB Modification Confirm | Established if begin type = ENDC and technology = LTE and the fragment was created by this message |
| X2AP SgNB Release Request | Established if begin type = ENDC and technology = LTE and the fragment was created by this message |
| X2AP SgNB Release Request Acknowledge | Established if begin type = ENDC and technology = LTE and the fragment was created by this message |
| X2AP SgNB Release Required | Established if begin type = ENDC and technology = LTE and the fragment was created by this message |
| X2AP SgNB Release Confirm | Established if begin type = ENDC and technology = LTE and the fragment was created by this message |
| X2AP SgNB Modification Request | Established if begin type = ENDC and technology = LTE and the fragment was created by this message |
| X2AP SgNB Modification Request Acknowledge | Established if begin type = ENDC and technology = LTE and the fragment was created by this message |
| X2AP SgNB Change Required | Established if begin type = ENDC and technology = LTE and the fragment was created by this message |
| X2AP SgNB Change Confirm | Established if begin type = ENDC and technology = LTE and the fragment was created by this message |
| X2AP SgNB Reconfiguration Complete | Established if begin type = ENDC and technology = LTE and the fragment was created by this message |

X2AP UE Context Release message is a special one due to being used for different standard procedures: handover and ENDC procedures. When the message does not include SgNB UE X2AP Id parameter, if it is traced in the source eNB, it will set endType = X2apHo, else if the begin type is X2apHo then it will set the fragment to "Established". When the message includes SgNB UE X2AP Id parameter, if the fragment technology is NR, then it will set endType = ENDC.

Process unlinked messages - There are two different scenarios depending on the message type:
a. S1AP Reset, S1AP Reset Acknowledge, NGAP Reset and NGAP Reset Acknowledge that can be linked to several cell fragments
b. Other special messages that will be stored

**Scenario 1: S1AP/NGAP Reset and S1AP/NGAP Reset Acknowledge** - S1AP/NGAP Reset and S1AP/NGAP Reset Acknowledge messages will find every fragment that they can be linked to. In case of the S1AP/NGAP Reset, depending on Reset Type parameter it can be linked to all the opened fragments in the Link Generator Serving belonging to the same Enb or to a list of them identified in the UE Associated Logical S1 Connection List parameter. In the case of the S1AP/NGAP Reset Acknowledge the second option is the only one available. Again, FIG. 12 illustrates how to process S1AP/NGAP Reset messages. As shown in FIG. 12, for each fragment found there are 3 steps:
(1) Update fragment with message information: the parameters updated in the fragment are:
   ∘ lastTimestamp: message timestamp
   ∘ lastMessage: message type
   ∘ endType: RESET
(2) Clone message: as the message can be linked to several fragments, we have to clone the message as many times as fragments to link.
(3) Update cloned message with fragment information: the parameters updated in the message are:
   ∘ cellFragmentldentifier: fragment cellFragmentldentifier
   ∘ source: fragment source
   ∘ index: fragment message index
   ∘ cell id: fragment cell id

**Scenario 2: Other special messages** - If the message has not been linked in the step 1 and does not have fragmentld1 or fragmentld2 and is one of an RRC Connection Request, RRC Connection Request-NB, X2AP Handover Request, S1AP Handover Request, RRC Connection Reestablishment Request, X2AP Handover Report, X2AP RLF Indication, S1AP Reset, S1AP Reset Acknowledge, etc., store it in a specific map to try to link the message later. Again, FIG. 13 illustrates how to store unlinked EUTRA-RRC RRC Connection Request messages.

Each message type will be stored in a different map with a different key parameter. The following table shows the map and the keys for each type of message:

**Table 5. Stored messages without fragment identifiers**

| **Message** | **Fragment map** | **Message keys** |
|---|---|---|
| **EUTRA-RRC RRC Connection Request** | _unpairedRrcConnRequestMessages | CRNTI, Cell Id, Initial UE Identity, Establishment Cause |
| **EUTRA-RRC RRC Connection Reestablishment Request¹** | _unpairedReEstabByFragmentld2Messages | Cell Id, fragment Id 2 |
| **EUTRA-RRC RRC Connection Reestablishment Request¹** | _unpairedReEstabByCrntiMessages | Cell Id, crnti |
| **X2AP Handover Request** | _unpairedX2HoReqMessages | Cell Id, Old UE X2AP Id |
| **S1AP Handover Request** | _unpairedS1HoReqMessages | Cell Id, MME UE S1AP Id |
| **X2AP Handover Report** | _unpairedX2HoReportMessages | Source cell ECGI, Failure cell ECGI |
| **X2AP RLF Indication** | _unpairedX2RlfIndicationMessages | Reestablishment cell ECGI, CRNTI |
| **EUTRA-RRC RRC Connection Request-NB** | _unpairedRrcConnRequestMessagesNB | CRNTI, Cell Id |

Note 1 - EUTRA-RRC Connection Reestablishment Request will search in two different maps depending on having fragmentld2 parameter or not. Also, in the key of every map we have to add: message.technology, message.vendor, message.mcc, message.mnc,

Update cell fragment - If the fragment has not set mmeUeS1ap parameter and message contains it, the message will update the parameter and the fragment will be added to the _mmeUeS1apIdMap map. If the fragment has not set enbUeS1ap parameter and message contains it, the message will update the parameter and the fragment will be added to the _enbUeS1apldMap map. If the fragment has not been already added to the _eutraRrcRrcConnReconfMap, it will be added.

Get linked messages - When a message has been linked to a fragment the latest step is to try to retrieve unlinked messages that have been stored in the processing of unlinked message with the fragment and the message information. For each unlinked message type there are one or several messages that try to retrieve it. The unlinked message will be searched in a specific map and with specific keys depending on the message type. There are also time considerations to decide if the fragment with the same keys is the right one.

In case the unlinked message is not found, the fragment will be added to the corresponding map. Again, FIG. 14 illustrates how to retrieve unlinked messages.

Table 6 shows the map to search, the keys and the temporary condition for each message type. Note that the relation between the map and the unlinked message is registered in Table 5

**Table 2. Retrieving unlinked messages information**

| **Message** | **Messages map** | **Message keys** | **Time span** |
|---|---|---|---|
| **ProcRrcConnSetu p** | _unpairedRrcConnRequestMessages | CRNTI, Cell Id, Initial UE Identity, Establishmen t Cause | 30 seconds |
| **ProcRrcConnSetu p** | _unpairedRrcConnRequestNbMessages | CRNTI, Cell Id | 30 seconds |
| **EUTRA-RRC Connection Reestablishment'** | _unpairedReEstabByCrntiMessages | Cell Id, crnti | 350 millisecond s |
| **EUTRA-RRC Connection Reestablishment'** | _unpairedReEstabByFragmentld2Message s | Cell Id, fragment Id 2 | 350 millisecond s |
| **X2AP Handover Request** | _unpairedX2RlfIndicationMessages | Target Cell Id, CRNTI | 30 seconds |
| **X2AP Handover Request** | _unpairedX2HoReportMessages | Last Visited Cell Id, Target Cell Id | 30 seconds |
| **X2AP Handover Request Acknowledge^{2,3}** | _unpairedX2HoReqMessages | Cell Id, Old UE X2AP Id | 30 seconds |
| **X2AP Handover Preparation Failure^{2,3}** | _unpairedX2HoReqMessages | Cell Id, Old UE X2AP Id | 30 seconds |
| **X2AP Handover Cancel^{2,3}** | _unpairedX2HoReqMessages | Cell Id, Old UE X2AP Id | 30 seconds |
| **S1AP Handover Request Acknowledge** | _unpairedS1HoReqMessages | Cell Id, MME UE S1AP Id | 30 seconds |
| **S1AP Handover Failure** | _unpairedS1HoReqMessages | Cell Id, MME UE S1AP Id | 30 seconds |

Note 1 - EUTRA-RRC Connection Reestablishment Request will search in two different maps first in the _unpairedReEstabByCrntiMessages and in case message is not found in unpairedReEstabByFragmentld2Messages.

Note 2 - Only messages traced in the target eNB

Note 3 - In case Handover Request is retrieve, use Handover Request as an input of the algorithm. Also, in the key of every map we have to add: message.technology, message.vendor, message.mcc, message.mnc,

Table 7 shows the relation between message type and map where fragment is stored in case unlinked message is not found:

**Table 7.Cell fragment maps**

| **Message** | **Messages map** | **Message keys** |
|---|---|---|
| **ProcRrcConnSetup** | _rrcConnRequestMap | CRNTI, Cell Id, Initial UE Identity, Establishment Cause |
| **ProcRrcConnSetup** | _rrcConnRequestNbMap | CRNTI, Cell Id |
| **EUTRA-RRC Connection Reestablishment** | _reEstabRequestByCrntiMap | Cell Id, crnti |
| **EUTRA-RRC Connection Reestablishment** | _reEstabRequestByFragmentld2Map | Cell Id, fragment Id 2 |
| **X2AP Handover Request** | _x2RlfIndicationMap | Target Cell Id, CRNTI |
| **X2AP Handover Request** | _x2HoReportMap | Last Visited Cell Id, Target Cell Id |
| **X2AP Handover Request Acknowledge^{2,3}** | _x2HoReqMap | Cell Id, Old UE X2AP Id |
| **X2AP Handover Preparation Failure^{2,3}** | _x2HoReqMap | Cell Id, Old UE X2AP Id |
| **X2AP Handover Cancel^{2,3}** | _x2HoReqMap | Cell Id, Old UE X2AP Id |
| **S1AP Handover Request Acknowledge** | _s1HoReqMap | Cell Id, MME UE S1AP Id |
| **S1AP Handover Failure** | _s1HoReqMap | Cell Id, MME UE S1AP Id |

Note 2 - Only messages traced in the target eNB

Note 3 - In case Handover Request is retrieve, use Handover Request as an input of the algorithm. Also, in the key of every map we have to add: message.technology, message.vendor, message.mcc, message.mnc,

The retrieved messages will be updated with the fragment information. The parameters updated with the fragment information are: cellFragmentldentifier, souce, index and cellld.

The output of the Link Generation Service 10 allows the distribution of the messages between all the elements in the pipeline guaranteeing that all messages belonging to the same call are processed by the same kind of service.

Output format of Link Generation service is described as follows:

**Table 8. Output of Link Generation Service**

| **Field** | **Type** | **Description** |
|---|---|---|
| **timestamp_utc_ms** | int64 | Timestamp of the message in milliseconds |
| **time_zone_correction** | int32 | Time zone correction |
| **timestamp_dst_cor** | int32 | Day Light Save Time Correction |
| **technology** | int32 | Technology |
| **vendor** | int32 | Vendor |
| **version** | int32 | Version |
| **mcc** | string | Mobile Country Code of the subscriber network (3 digits) |
| **mnc** | string | Mobile Network Code of the subscriber network (2/3 dig) |
| **fragment_id_1** | int64 | First Identifier of the Unique Session Id for the UE |
| **fragment_id_2** | int64 | Second Identifier of the Unique Session Id for the UE |
| **enb_id** | int64 | eNode B Id or gNode B Id depending on technology |
| **cell_id** | int32 | Cell Id |
| **core_ue_id** | int64 | mme_ue_s1ap_id or amf_ue_ngap_id depending on the technology. Uniquely identifies the UE association over the S1 interface within the MME or NG interface within the AMF |
| **ran_ue_id** | int64 | enb_ue_s1ap_id or ran_ue_ngap_id depending on the technology. Uniquely identifies the UE association over the S1 interface within an eNB or NG interface within an gNB |
| **gummei** | int64 | gummei or guami depending on the technology. Unique identifier of an MME or an AMF |
| **c_rnti** | int32 | C-RNTI Identifier |
| **message_type** | int32 | enumerated to identify the same message from different vendors |
| **message_direction** | int32 | Message direction: sent, received |
| **message_content** | bytes | asn.1 content for 3GPP messages, raw data for messages |
| **cell_fragment_identifier** | int64 | Unique Identifier to link message to a cell Fragment Identifier. 2 pod ID, 6 auto incremental (starting from 0) |
| **message_index** | int64 | Message index inside of the cell fragment |
| **ne_source_type** | int32 | Source network element type |
| **ne_source_identifiers** | int64 | Source network element internal unique identifier |
| **ne_target_type** | int32 | Target network element type |
| **ne_target_identifiers** | int64 | Target network element internal unique identifier |
| **imsi** | string | International Mobile Subscriber Identity |
| **ue_mcc** | string | Mobile Country Code of the Home Public Land Mobile Network |
| **ue_mnc** | string | Mobile Network Code of the Home Public Land Mobile Network |
| **imei** | string | International Mobile Equipment Identity |
| **svn** | string | Handset Software Version |
| **handset_tac** | string | Type Allocation Code of the subscriber handset |
| **source_identifier** | int32 | Source identifier with edge information to allow edge distribution. 1 edge, 3 pod ID |
| **gnodeb_id_length** | int32 | Number of bits used to encode gNodeB Id |

### Process

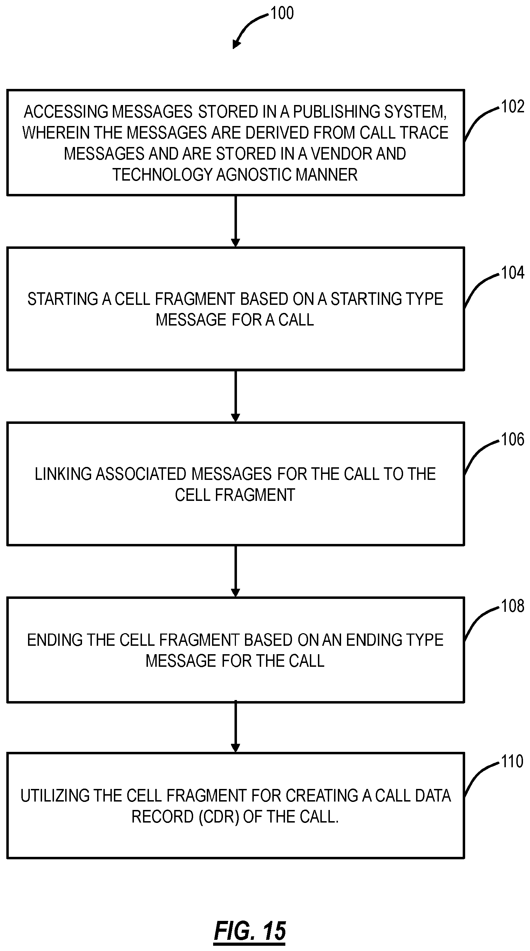

FIG. 15 is a flowchart of a process 100 for link generation for a Radio Access Network (RAN) parser that links messages from different interfaces into cell fragments. The process 100 contemplates implementation as a method having steps, via a processing device configured to implement the steps, via a cloud service configured to implement the steps, and/or as non-transitory computer-readable medium with instructions that, when executed, cause one or more processors to implement the steps.

The process 100 includes accessing messages stored in a publishing system, wherein the messages are derived from Call Trace messages and are stored in a vendor and technology agnostic manner (step 102); starting a cell fragment based on a starting type message for a call (step 104); linking associated messages for the call to the cell fragment (step 106); ending the cell fragment based on an ending type message for the call (step 108); and utilizing the cell fragment for creating a Call Data Record (CDR) of the call (step 110). The publishing system is configured to receive the messages at an edge of a mobile network.

The linking can be based on fragment identifiers in the messages. The linking for messages that do not have the fragment identifiers can be based on using standard fields from other messages already linked in the cell fragment. The other messages can be any of an RRC Connection Request, RRC Connection Request-NB, X2AP Handover Request, S1AP Handover Request, RRC Connection Reestablishment Request, X2AP Handover Report, X2AP RLF Indication, S1AP Reset, S1AP Reset Acknowledge, NGAP Reset and NGAP Reset Acknowledge. The process 100 can further include enriching the cell fragment with user identities for the call. The user identities can include one or more of International Mobile Subscriber Identity (IMSI) and International Mobile Equipment Identity (IMEI). The call can be in one of three different states including started, established, and ended, and wherein the linking is based on which state the call is in.

### Processing system

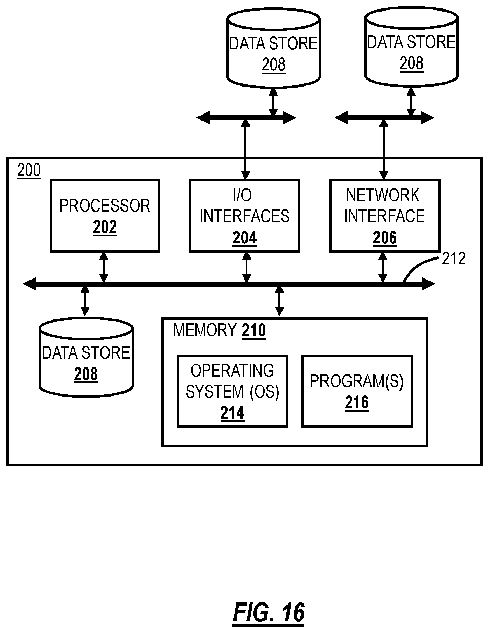

FIG. 16 is a block diagram of a processing system 200, which may be used to implement the process 100. The processing system 200 may be a digital computer that, in terms of hardware architecture, generally includes a processor 202, input/output (I/O) interfaces 204, a network interface 206, a data store 208, and memory 210. It should be appreciated by those of ordinary skill in the art that FIG. 16 depicts the processing system 200 in an oversimplified manner, and a practical embodiment may include additional components and suitably configured processing logic to support known or conventional operating features that are not described in detail herein. The components (202, 204, 206, 208, and 210) are communicatively coupled via a local interface 212. The local interface 212 may be, for example, but not limited to, one or more buses or other wired or wireless connections, as is known in the art. The local interface 212 may have additional elements, which are omitted for simplicity, such as controllers, buffers (caches), drivers, repeaters, and receivers, among many others, to enable communications. Further, the local interface 212 may include address, control, and/or data connections to enable appropriate communications among the aforementioned components.

The processor 202 is a hardware device for executing software instructions. The processor 202 may be any custom made or commercially available processor, a Central Processing Unit (CPU), an auxiliary processor among several processors associated with the processing system 200, a semiconductor-based microprocessor (in the form of a microchip or chipset), or generally any device for executing software instructions. When the processing system 200 is in operation, the processor 202 is configured to execute software stored within the memory 210, to communicate data to and from the memory 210, and to generally control operations of the processing system 200 pursuant to the software instructions. The I/O interfaces 204 may be used to receive user input from and/or for providing system output to one or more devices or components.

The network interface 206 may be used to enable the processing system 200 to communicate on a network, such as the Internet 104. The network interface 206 may include, for example, an Ethernet card or adapter or a Wireless Local Area Network (WLAN) card or adapter. The network interface 206 may include address, control, and/or data connections to enable appropriate communications on the network. A data store 208 may be used to store data. The data store 208 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof.

Moreover, the data store 208 may incorporate electronic, magnetic, optical, and/or other types of storage media. In one example, the data store 208 may be located internal to the processing system 200, such as, for example, an internal hard drive connected to the local interface 212 in the processing system 200. Additionally, in another embodiment, the data store 208 may be located external to the processing system 200 such as, for example, an external hard drive connected to the I/O interfaces 204 (e.g., SCSI or USB connection). In a further embodiment, the data store 208 may be connected to the processing system 200 through a network, such as, for example, a network-attached file server.

The memory 210 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 210 may incorporate electronic, magnetic, optical, and/or other types of storage media. Note that the memory 210 may have a distributed architecture, where various components are situated remotely from one another but can be accessed by the processor 202. The software in memory 210 may include one or more software programs, each of which includes an ordered listing of executable instructions for implementing logical functions. The software in the memory 210 includes a suitable Operating System (O/S) 214 and one or more programs 216. The operating system 214 essentially controls the execution of other computer programs, such as the one or more programs 216, and provides scheduling, input-output control, file and data management, memory management, and communication control and related services. The one or more programs 216 may be configured to implement the various processes, algorithms, methods, techniques, etc. described herein.

In an embodiment, one or more processing devices 200 can be configured in a cluster and/or in a cloud system, for implementing the process 100. Cloud computing systems and methods abstract away physical servers, storage, networking, etc., and instead offer these as on-demand and elastic resources. The National Institute of Standards and Technology (NIST) provides a concise and specific definition which states cloud computing is a model for enabling convenient, on-demand network access to a shared pool of configurable computing resources (e.g., networks, servers, storage, applications, and services) that can be rapidly provisioned and released with minimal management effort or service provider interaction. Cloud computing differs from the classic client-server model by providing applications from a server that are executed and managed by a client's web browser or the like, with no installed client version of an application required. The phrase "Software as a Service" (SaaS) is sometimes used to describe application programs offered through cloud computing. A common shorthand for a provided cloud computing service (or even an aggregation of all existing cloud services) is "the cloud."

### Conclusion

It will be appreciated that some embodiments described herein may include one or more generic or specialized processors ("one or more processors") such as microprocessors; central processing units (CPUs); digital signal processors (DSPs): customized processors such as network processors (NPs) or network processing units (NPUs), graphics processing units (GPUs), or the like; field programmable gate arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more application-specific integrated circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer-readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a read-only memory (ROM), a programmable read-only memory (PROM), an erasable programmable read-only memory (EPROM), an electrically erasable programmable read-only memory (EEPROM), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

Although the present disclosure has been illustrated and described herein with reference to preferred embodiments and specific examples thereof, it will be readily apparent to those of ordinary skill in the art that other embodiments and examples may perform similar functions and/or achieve like results, and fall within the scope of the invention as defined by the claims. The foregoing sections include headers for various embodiments and those skilled in the art will appreciate these various embodiments may be used in combination with one another as well as individually.

## Claims

1. A method (100) for link generation for a Radio Access Network, RAN, parser, the method comprising steps of:
accessing (102) messages stored in a publishing system, wherein the messages are derived from Call Trace messages and are stored in a vendor- and technology-agnostic format;
starting (104) a cell fragment having a start type based on a message, of the accessed messages, that indicates a start of a call or a handover of a User Equipment, UE, associated with the call to a cell, wherein a cell fragment is a defined portion of a call associated with a specific serving cell;
linking (106) associated messages for the call to the cell fragment, wherein linking is based on fragment identifiers in the messages or, for messages in which no fragment identifiers are present, linking is based on using fields from other messages already linked in the cell fragment;
ending (108) the cell fragment based on a message that indicates a release of the call or a handover of the call from the cell to another cell; and
utilizing (110) the cell fragment for creating a Call Data Record, CDR, of the call.

2. The method (100) as claimed in claim 1, wherein the publishing system is configured to receive the messages at an edge of a mobile network.

3. The method (100) as claimed in claim 1 or 2, wherein the other messages are any of a Radio Resource Control, RRC, Connection Request, RRC Connection Request-NB, X2AP Handover Request, S1AP Handover Request, RRC Connection Reestablishment Request, X2AP Handover Report, X2AP RLF Indication, S1AP Reset, and S1AP Reset Acknowledge.

4. The method (100) as claimed in any one of claims 1 to 3, wherein the steps further include:
enriching the cell fragment with user identities for the call.

5. The method (100) as claimed in claim 4, wherein the user identities include one or more of International Mobile Subscriber Identity, IMSI, and International Mobile Equipment Identity, IMEI.

6. The method (100) as claimed in any one of claims 1 to 5, wherein, during the linking, the call is in one of three different states including started, established, and ended based on the message type and message information, and wherein the linking is based on which state the call is in.

7. A processing system (200) comprising one or more processors (202) configured to implement the method (100) as claimed in any one of claims 1 to 6.

8. A signal including instructions for programming one or more processors to implement the method (100) as claimed in any one of claims 1 to 6.

9. A computer-readable medium storing instructions for programming one or more processors to implement the method (100) as claimed in any one of claims 1 to 6.

## Patentansprüche

1. Verfahren (100) zur Linkerzeugung für einen Parser eines Funkzugangsnetzes, RAN, wobei das Verfahren die Schritte umfasst:
Zugreifen (102) auf Nachrichten, die in einem Veröffentlichungssystem gespeichert sind, wobei die Nachrichten aus Anrufverfolgungsnachrichten abgeleitet sind und in einem anbieter- und technologieunabhängigen Format gespeichert sind;
Beginnen (104) eines Zellfragments mit einem Starttyp basierend auf einer Nachricht aus den abgerufenen Nachrichten, die einen Beginn eines Anrufs oder eine Übergabe eines mit dem Anruf verbundenen Benutzergeräts, UE, an eine Zelle anzeigt, wobei ein Zellfragment ein definierter Teil eines Anrufs ist, der mit einer spezifischen bedienenden Zelle verbunden ist;
Verknüpfen (106) zugehöriger Nachrichten für den Anruf mit dem Zellfragment, wobei das Verknüpfen auf Fragmentidentifikatoren in den Nachrichten basiert, oder für Nachrichten, in denen keine Fragmentidentifikatoren vorhanden sind, das Verknüpfen auf einem Verwenden von Feldern aus anderen Nachrichten basiert, die bereits im Zellfragment verknüpft sind;
Beenden (108) des Zellfragments auf der Grundlage einer Nachricht, die eine Freigabe des Anrufs oder eine Übergabe des Anrufs von der Zelle an eine andere Zelle anzeigt; und
Verwenden (110) des Zellfragments zum Erstellen eines Anrufdatensatzes, CDR, des Anrufs.

2. Verfahren (100) nach Anspruch 1, wobei das Veröffentlichungssystem so ausgebildet ist, dass es die Nachrichten an einem Rand eines Mobilfunknetzes empfängt.

3. Verfahren (100) nach Anspruch 1 oder 2, wobei die anderen Nachrichten eines von Folgendem sind: Funkressourcensteuerungs-, RRC-, Verbindungsanforderung, RRC-Verbindungsanforderungs-NB, X2AP-Übertragungsanforderung, S1AP-Übertragungsanforderung, RRC-Verbindungswiederherstellungsanforderung, X2AP-Übertragungsbericht, X2AP-RLF-Indikation, S1AP-Zurücksetzung und S1AP-Zurücksetzungsbestätigung.

4. Verfahren (100) nach einem der Ansprüche 1 bis 3, wobei die Schritte weiter einschließt:
Anreichern des Zellfragments mit Benutzeridentitäten für den Anruf.

5. Verfahren (100) nach Anspruch 4, wobei die Benutzeridentitäten eine oder mehrere von einer internationalen Mobilteilnehmeridentität, IMSI, und internationale Mobilgeräte-Identität, IMEI, einschließt.

6. Verfahren (100) nach einem der Ansprüche 1 bis 5, wobei sich der Anruf während dem Verknüpfen in einem von drei verschiedenen Zuständen befindet, einschließlich gestartet, hergestellt und beendet, basierend auf dem Nachrichtentyp und den Nachrichteninformationen, und wobei das Verknüpfen darauf basiert, in welchem Zustand sich der Anruf befindet.

7. Verarbeitungssystem (200), umfassend einen oder mehrere Prozessoren (202), die so ausgebildet sind, dass sie das in einem der Ansprüche 1 bis 6 beanspruchte Verfahren (100) implementieren.

8. Signal, das Anweisungen zum Programmieren eines oder mehrerer Prozessoren einschließt, um das Verfahren (100) nach einem der Ansprüche 1 bis 6 zu implementieren.

9. Computerlesbares Medium, das Anweisungen zum Programmieren eines oder mehrerer Prozessoren speichert, um das in einem der Ansprüche 1 bis 6 beanspruchte Verfahren (100) zu implementieren.

## Revendications

1. Procédé (100) de génération de liaison pour un analyseur de réseau d'accès radio, RAN, le procédé comprenant les étapes consistant à :
accéder (102) à des messages stockés dans un système de publication, dans lequel les messages sont dérivés de messages de suivi d'appel et sont stockés dans un format indépendant du fournisseur et de la technologie ;
démarrer (104) un fragment de cellule présentant un type de démarrage sur la base d'un message, des messages accédés, qui indique un démarrage d'un appel ou un transfert d'un équipement utilisateur, UE, associé à l'appel vers une cellule, dans lequel un fragment de cellule est une partie définie d'un appel associé à une cellule de desserte spécifique ;
lier (106) des messages associés pour l'appel au fragment de cellule, dans lequel la liaison est basée sur des identifiants de fragment dans les messages ou, pour des messages dans lesquels aucun identifiant de fragment n'est présent, la liaison est basée sur l'utilisation de champs d'autres messages déjà liés dans le fragment de cellule ;
terminer (108) le fragment de cellule sur la base d'un message qui indique une libération de l'appel ou un transfert de l'appel de la cellule vers une autre cellule ; et
utiliser (110) le fragment de cellule pour créer un enregistrement de données d'appel, CDR, de l'appel.

2. Procédé (100) selon la revendication 1, dans lequel le système de publication est configuré pour recevoir les messages à une extrémité d'un réseau mobile.

3. Procédé (100) selon la revendication 1 ou la revendication 2, dans lequel les autres messages sont l'un quelconque d'une demande de connexion de commande de ressource radio, RRC, une demande de connexion RRC-NB, une demande de transfert X2AP, une demande de transfert S1AP, une demande de rétablissement de connexion RRC, un rapport de transfert X2AP, une indication de RLF X2AP, une réinitialisation S1AP et un accusé de réception de réinitialisation S1AP.

4. Procédé (100) selon l'une quelconque des revendications 1 à 3, dans lequel les étapes incluent en outre :
un enrichissement du fragment de cellule avec des identités d'utilisateur pour l'appel.

5. Procédé (100) selon la revendication 4, dans lequel les identités d'utilisateur incluent une ou plusieurs identités parmi une identité d'abonné mobile international, IMSI, et une identité d'équipement mobile international, IMEI.

6. Procédé (100) selon l'une quelconque des revendications 1 à 5, dans lequel, pendant la liaison, l'appel est dans l'un des trois états différents incluant démarré, établi et terminé sur la base du type de message et des informations de message, et dans lequel la liaison est basée sur l'état dans lequel l'appel est.

7. Système de traitement (200) comprenant un ou plusieurs processeurs (202) configurés pour mettre en œuvre le procédé (100) selon l'une quelconque des revendications 1 à 6.

8. Signal incluant des instructions pour programmer un ou plusieurs processeurs afin de mettre en œuvre le procédé (100) selon l'une quelconque des revendications 1 à 6.

9. Support lisible par ordinateur stockant des instructions pour programmer un ou plusieurs processeurs afin de mettre en œuvre le procédé (100) selon l'une quelconque des revendications 1 à 6.
